# EUROPEAN PATENT APPLICATION

(11) **EP 4 596 505 A1**
(43) Date of publication of application: **06.08.2025**
(21) Application number: 23871808.4
(22) Date of filing: 07.09.2023
(51) Int. Cl.: C02F 1/461

(54) **ELECTROLYTIC BATH**

(30) Priority: 30.09.2022 JP 2022157343
(71) Applicant: Panasonic Intellectual Property Management Co., Ltd., Kadoma-shi, Osaka 571-0057 (JP)
(72) Inventor: ISONO, Mai, Kadoma-shi, Osaka 571-0057 (JP); SHIBATA, Naoki, Kadoma-shi, Osaka 571-0057 (JP)
(74) Representative: Appelt, Christian W.
(86) International application number: PCT/JP2023/032721
(87) International publication number: WO 2024/070570

(57) **Abstract**

An electrolytic bath comprising a plurality of cells that electrolyzes water, wherein each of the cells includes a pair of electrodes, a pair of partition walls, and a pair of frames that supports the electrodes and the partition walls, the plurality of cells includes a stacked body in which one electrode and one partition wall are alternately arranged, and includes a first flow inlet that allows raw water to flow into a first treatment space including a first electrode, a second flow inlet that allows raw water to flow into a second treatment space including a second electrode, a first flow outlet that allows treated water having passed through the first treatment space to flow out, a second flow outlet that allows treated water having passed through the second treatment space to flow out, a first inflow path facing the first flow inlet, a second inflow path facing the second flow inlet, a first outflow path facing the first flow outlet, and a second outflow path facing the second flow outlet, and a buffer inflow path connected to the first inflow path and the second inflow path in a stacking direction of the stacked body is further provided.

## Description

### TECHNICAL FIELD

The present invention relates to an electrolytic bath.

### BACKGROUND ART

Conventionally, there has been known an electrolyzed water generator that includes an electrolytic bath having an anode chamber and a cathode chamber partitioned by a partition wall, and electrolyzes raw water introduced into the electrolytic bath to generate electrolytic hydrogen water (see, for example, Patent Document 1).

The electrolytic bath of the electrolyzed water generator disclosed in Patent Document 1 is a multipolar electrolytic bath configured by stacking a plurality of cells.

### PRIOR ART DOCUMENT

### PATENT DOCUMENT

Patent Document 1: JP-A-2021-195596

### SUMMARY OF THE INVENTION

### PROBLEMS TO BE SOLVED BY THE INVENTION

However, when raw water flows in the plurality of cells, distribution occurs in internal pressure and flow rate, and thus, there is a possibility that variation in flow rate among the cells increases, and electrolytic performance deteriorates.

Therefore, an object of the present invention is to solve the above problems, and to provide an electrolytic bath with improved electrolytic performance.

### SOLUTIONS TO THE PROBLEMS

In order to achieve the above object, an electrolytic bath of the present disclosure includes a plurality of cells that electrolyzes water, in which each of the cells includes a pair of electrodes, a pair of partition walls, and a pair of frames that supports the electrodes and the partition walls, the plurality of cells includes a stacked body in which one electrode and one partition wall are alternately arranged, and includes a first flow inlet that allows raw water to flow into a first treatment space including a first electrode, a second flow inlet that allows raw water to flow into a second treatment space including a second electrode, a first flow outlet that allows treated water having passed through the first treatment space to flow out, a second flow outlet that allows treated water having passed through the second treatment space to flow out, a first inflow path facing the first flow inlet, a second inflow path facing the second flow inlet, a first outflow path facing the first flow outlet, and a second outflow path facing the second flow outlet, and a buffer inflow path connected to the first inflow path and the second inflow path in a stacking direction of the stacked body is further provided.

### EFFECTS OF THE INVENTION

The electrolytic bath of the present invention can improve the electrolytic performance.

### BRIEF DESCRIPTION OF THE DRAWINGS

[Fig. 1] Fig. 1 is a perspective view of an electrolytic bath according to an embodiment.
[Fig. 2] Fig. 2 is a perspective view of the electrolytic bath according to the embodiment.
[Fig. 3] Fig. 3 is a front view of the electrolytic bath according to the embodiment.
[Fig. 4] Fig. 4 is an exploded perspective view of the electrolytic bath according to the embodiment.
[Fig. 5] Fig. 5 is an exploded perspective view of the electrolytic bath according to the embodiment.
[Fig. 6] Fig. 6 is a perspective view of a stacked body according to the embodiment.
[Fig. 7] Fig. 7 is a perspective view of a cell constituting the stacked body according to the embodiment.
[Fig. 8] Fig. 8 is a perspective view of the cell constituting the stacked body according to the embodiment.
[Fig. 9] Fig. 9 is an exploded perspective view of the cell according to the embodiment.
[Fig. 10] Fig. 10 is an exploded perspective view of the cell according to the embodiment.
[Fig. 11] Fig. 11 is a longitudinal sectional view schematically showing an internal section of the stacked body according to the embodiment.
[Fig. 12] Fig. 12 is a perspective view showing a longitudinal section including a first inflow port and a second outflow port of the electrolytic bath according to the embodiment.
[Fig. 13] Fig. 13 is a perspective view showing a longitudinal section including a second inflow port and a first outflow port of the electrolytic bath according to the embodiment.
[Fig. 14] Fig. 14 is an enlarged schematic longitudinal sectional view showing a first inflow path and a periphery of a first flow inlet according to the embodiment.
[Fig. 15] Fig. 15 is an enlarged schematic longitudinal sectional view showing a second inflow path and a periphery of a second flow inlet according to the embodiment.
[Fig. 16] Fig. 16 is a longitudinal sectional view schematically showing a structure of an end of a frame forming the first flow inlet in the embodiment.
[Fig. 17] Fig. 17 is a longitudinal sectional view schematically showing a structure of an end of a frame forming the second flow inlet according to the embodiment.
[Fig. 18] Fig. 18 is an enlarged schematic longitudinal sectional view showing a first flow outlet and a periphery of a first outflow path according to the embodiment.
[Fig. 19] Fig. 19 is an enlarged schematic longitudinal sectional view showing a second flow outlet and a periphery of a second outflow path according to the embodiment.
[Fig. 20] Fig. 20 is a longitudinal sectional view schematically showing a structure of an end of a frame forming the first flow outlet according to the embodiment.
[Fig. 21] Fig. 21 is a longitudinal sectional view schematically showing a structure of an end of a frame forming the second flow outlet according to the embodiment.
[Fig. 22] Fig. 22 is a longitudinal sectional view schematically showing a structure of an end of a frame forming a flow inlet according to a first modification.
[Fig. 23] Fig. 23 is a longitudinal sectional view schematically showing an electrolytic bath according to a second modification.

### DETAILED DESCRIPTION

A first aspect of the present invention provides an electrolytic bath including a plurality of cells that electrolyzes water, in which each of the cells includes a pair of electrodes, a pair of partition walls, and a pair of frames that supports the electrodes and the partition walls, the plurality of cells includes a stacked body in which one electrode and one partition wall are alternately arranged, and includes a first flow inlet that allows raw water to flow into a first treatment space including a first electrode, a second flow inlet that allows raw water to flow into a second treatment space including a second electrode, a first flow outlet that allows treated water having passed through the first treatment space to flow out, a second flow outlet that allows treated water having passed through the second treatment space to flow out, a first inflow path facing the first flow inlet, a second inflow path facing the second flow inlet, a first outflow path facing the first flow outlet, and a second outflow path facing the second flow outlet, and a buffer inflow path connected to the first inflow path and the second inflow path in a stacking direction of the stacked body is further provided.

A second aspect of the present invention provides the electrolytic bath according to the first aspect of the present invention, in which the buffer inflow path includes a first buffer inflow path connected to the first inflow path in the stacking direction and a second buffer inflow path connected to the second inflow path in the stacking direction.

A third aspect of the present invention provides the electrolytic bath according to the first or second aspect of the present invention, in which the stacked body further includes a first buffer outflow path connected to the first outflow path in the stacking direction and a second buffer outflow path connected to the second outflow path in the stacking direction.

A fourth aspect of the present invention provides the electrolytic bath according to the third aspect, the electrolytic bath further including a first case having the buffer inflow path and a second case having the first buffer outflow path and the second buffer outflow path, in which the first case and the second case are attached to the stacked body.

A fifth aspect of the present invention provides the electrolytic bath according to the fourth aspect, in which the first case is attached to a first main surface of the stacked body, and the second case is attached to a second main surface of the stacked body, the second main surface facing the first main surface.

A sixth aspect of the present invention provides the electrolytic bath according to any one of the first to fifth aspects, in which a first direction from the first flow inlet to the first flow outlet and a second direction from the second flow inlet to the second flow outlet intersect each other when viewed along the stacking direction.

A seventh aspect of the present invention provides the electrolytic bath according to any one of the first to sixth aspects, in which each of the first inflow path, the second inflow path, the first outflow path, and the second outflow path extends in the stacking direction.

An eighth aspect of the present invention provides the electrolytic bath according to any one of the first to seventh aspects, in which an end of each of the electrodes in the flow inlet of the stacked body is located closer to a center of the stacked body than an end of each of the frames constituting the flow inlet.

A ninth aspect of the present invention provides the electrolytic bath according to any one of the first to eighth aspects, the electrolytic bath further including an inflow port that communicates with the buffer inflow path, in which a sectional area of the buffer inflow path is larger than a sectional area of an internal flow path of the inflow port.

A tenth aspect of the present invention provides the electrolytic bath according to any one of the first to ninth aspects, in which the flow inlet has a plurality of flow inlets spaced apart in the stacking direction, an end of each of the frames constituting the plurality of flow inlets has a first end having a first R shape and a second end located downstream of the first end and having a second R shape, and a curvature radius of the first R shape is larger than a curvature radius of the second R shape.

An eleventh aspect of the present invention provides the electrolytic bath according to any one of the first to tenth aspects, in which the flow inlet has a plurality of flow inlets spaced apart in the stacking direction, an end of each of the frames constituting the plurality of flow inlets has a first end having a first inclined surface and a second end located downstream of the first end and having a second inclined surface, and an inclination angle of the first inclined surface is larger than an inclination angle of the second inclined surface.

A twelfth aspect of the present invention provides the electrolytic bath according to any one of the first to eleventh aspects, in which an obstacle is inserted into a region downstream of the first inflow path or the second inflow path in the stacked body.

Hereinafter, an embodiment of the present invention will be described in detail with reference to the drawings. Note that the present invention is not limited by the embodiment.

### [Embodiment]

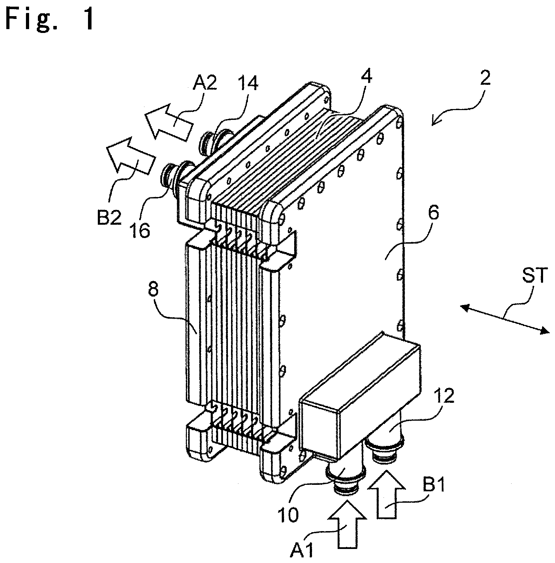

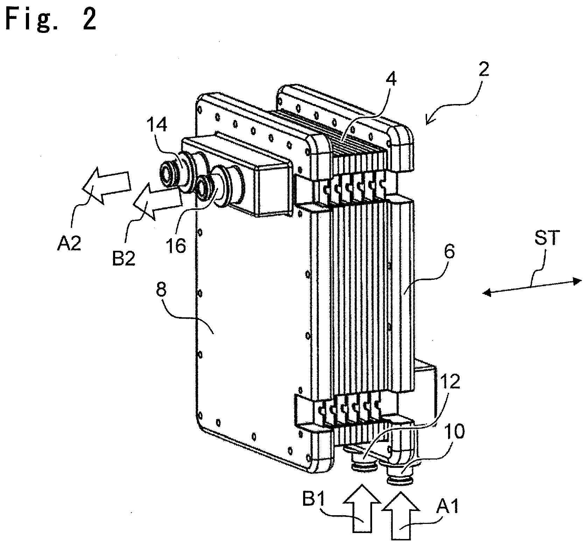

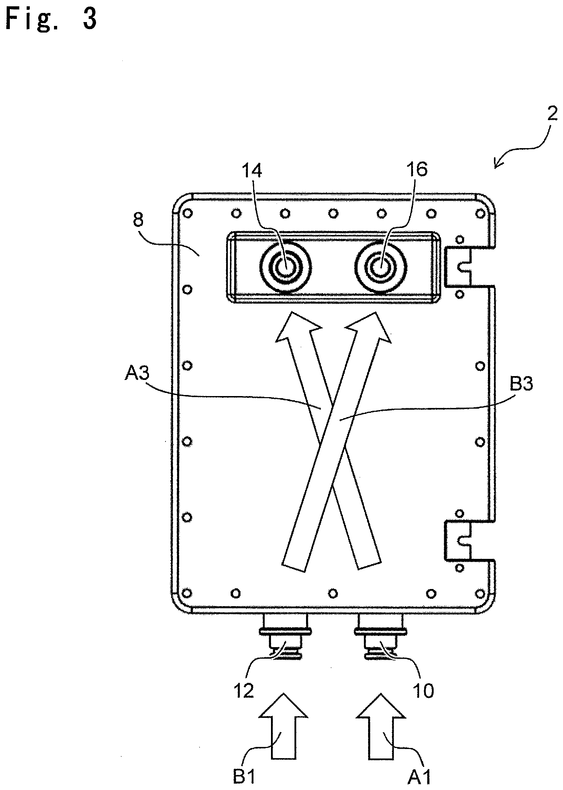

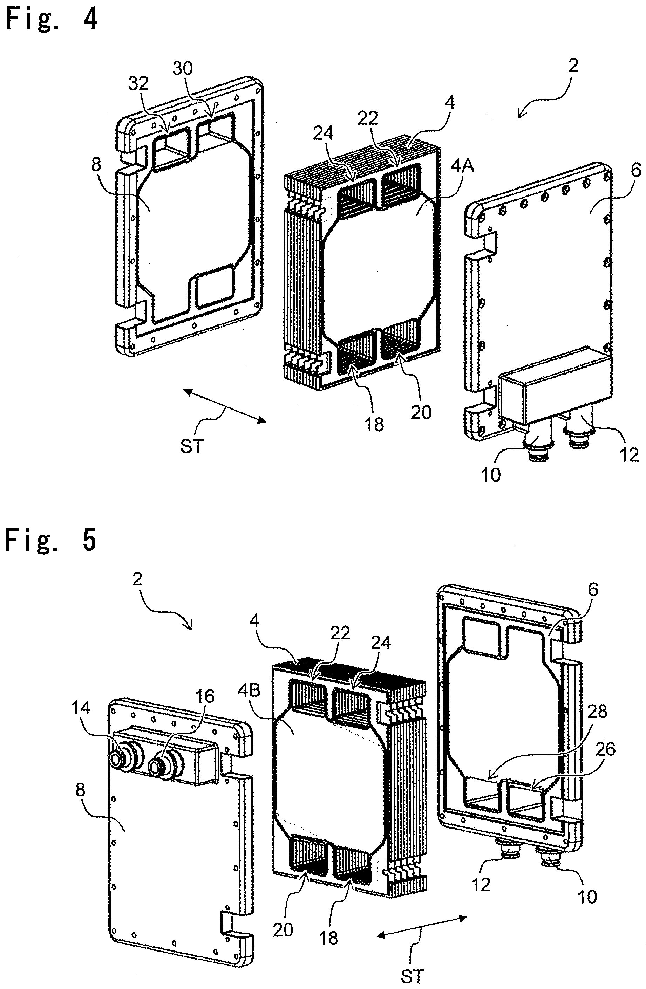

Each of Figs. 1 to 5 is a diagram showing an electrolytic bath 2 according to the embodiment. Figs. 1 and 2 are perspective views of the electrolytic bath 2, Fig. 3 is a front view of the electrolytic bath 2, and Figs. 4 and 5 are exploded perspective views of the electrolytic bath 2.

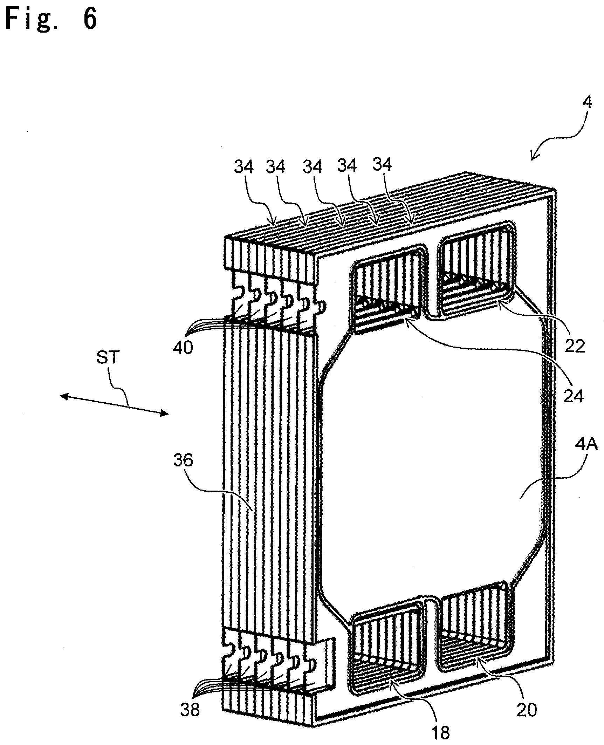

The electrolytic bath 2 shown in Figs. 1 to 5 is an electrolyzed water generator for electrolyzing raw water such as hard water to generate alkaline water and hydrogen water (treated water). Hard water is defined as, for example, water having a hardness of 120 mg/L or more. In particular, the electrolytic bath 2 shown in Figs. 1 to 5 is a so-called multipolar electrolytic bath having a stacked body 4 constituted by stacking a plurality of cells 34 (Figs. 6 to 8) in a stacking direction ST.

The electrolytic bath 2 shown in Figs. 1 to 3 includes the stacked body 4, and a first case 6 and a second case 8 that are attached to the stacked body 4.

The stacked body 4 includes the plurality of cells 34 (Figs. 6 to 8), has a plurality of flow paths inside, and incorporates an anode chamber/cathode chamber (treatment spaces S1 and S2 to be described later) for electrolyzing raw water. The first case 6 and the second case 8 are disposed on both surfaces of the stacked body 4.

Each of the cases 6 and 8 is a member that protects the stacked body 4 and constitutes a flow path communicating with the inside of the stacked body 4. The first case 6 is attached to a first main surface 4A (Fig. 4) of the stacked body 4, and the second case 8 is attached to a second main surface 4B (Fig. 5) of the stacked body 4.

The first case 6 has a first inflow port 10 and a second inflow port 12 as two ports for allowing raw water to flow into the stacked body 4. Similarly, the second case 8 has a first outflow port 14 and a second outflow port 16 as two ports for allowing treated water (alkaline water/acidic water) generated by electrolysis to flow out to the outside.

As shown in Figs. 1 to 3, the raw water (arrow A1) flowing in from the first inflow port 10 is electrolyzed to become alkaline water or acidic water when passing through the inside of the stacked body 4, and flows out from the first outflow port 14 (arrow A2). Similarly, the raw water (arrow B1) flowing in from the second inflow port 12 is electrolyzed to become acidic water or alkaline water when passing through an internal flow path of the stacked body 4, and flows out from the second outflow port 16 (arrow B2).

As shown in Fig. 3, a first direction A3 from the first inflow port 10 toward the first outflow port 14 and a second direction B3 from the second inflow port 12 toward the second outflow port 16 intersect each other.

As shown in Figs. 4 and 5, the stacked body 4 includes, as internal flow paths, a first inflow path 18, a second inflow path 20, a first outflow path 22, and a second outflow path 24.

The first inflow path 18 is a flow path connected to the first inflow port 10, and allows the raw water flowing in from the first inflow port 10 to pass through a treatment space of the stacked body 4. The first inflow path 18 is connected to the first outflow path 22 through the treatment space of the stacked body 4.

The second inflow path 20 is a flow path connected to the second inflow port 12, and allows the raw water flowing in from the second inflow port 12 to pass through a treatment space of the stacked body 4. The second inflow path 20 is connected to the second outflow path 24 through the treatment space of the stacked body 4.

As shown in Fig. 5, the first case 6 includes a first buffer inflow path 26 and a second buffer inflow path 28 as internal flow paths. The first buffer inflow path 26 is a flow path communicating with the first inflow port 10, and communicates with the first inflow path 18 of the stacked body 4 in an attached state of the stacked body 4 and the first case 6. The second buffer inflow path 28 is a flow path communicating with the second inflow port 12, and communicates with the second inflow path 20 of the stacked body 4 in the attached state of the stacked body 4 and the first case 6.

The first buffer inflow path 26 has a larger flow path sectional area than the internal flow path of the first inflow port 10 and functions as a buffer space. Similarly, the second buffer inflow path 28 has a larger flow path sectional area than the internal flow path of the second inflow port 12 and functions as a buffer space.

As shown in Fig. 4, the second case 8 includes a first buffer outflow path 30 and a second buffer outflow path 32 as internal flow paths. The first buffer outflow path 30 is a flow path communicating with the first outflow port 14, and communicates with the first outflow path 22 of the stacked body 4 in an attached state of the stacked body 4 and the second case 8. The second buffer outflow path 32 is a flow path communicating with the second outflow port 16, and communicates with the second outflow path 24 of the stacked body 4 in the attached state of the stacked body 4 and the second case 8.

The first buffer outflow path 30 has a larger flow path sectional area than the internal flow path of the first outflow port 14 and functions as a buffer space. The second buffer outflow path 32 has a larger flow path sectional area than the internal flow path of the second outflow port 16 and functions as a buffer space.

By providing a buffer space (buffer inflow paths 26 and 28) upstream of the treatment space and a buffer space (buffer outflow paths 30 and 32) downstream of the treatment space of the stacked body 4, the entire internal flow path of the stacked body 4 can be rectified, and a substantially constant amount of water easily flows into and out of each cell 34. As a result, it is possible to reduce a variation in a flow rate among the plurality of cells 34, obtain a uniform flow rate of water flowing through the inside of the stacked body 4, and improve an electric field performance of the electrolytic bath 2.

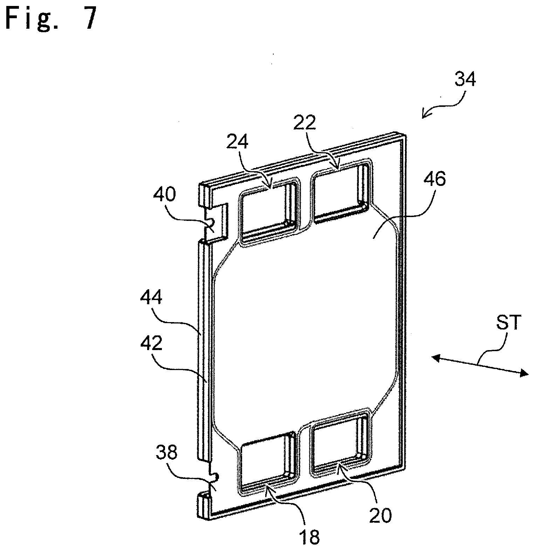

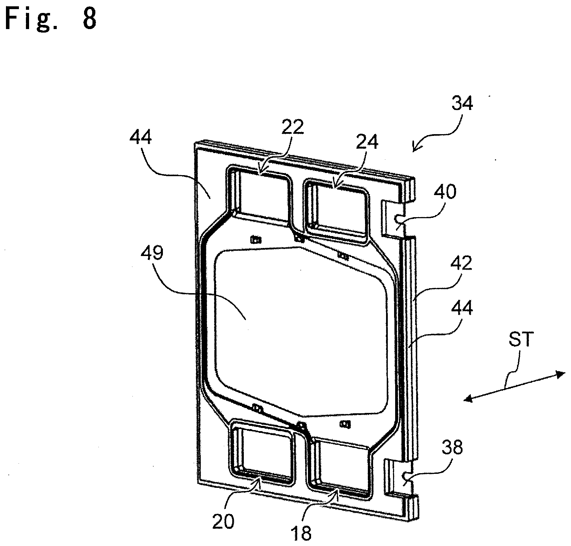

Fig. 6 is a perspective view showing the stacked body 4. Figs. 7 and 8 are perspective views showing one cell 34 that constitutes the stacked body 4. As described above, the stacked body 4 is configured by stacking the plurality of cells 34 in the stacking direction ST, and in the present embodiment, a case of including five cells 34 will be exemplified. The present invention is not limited to such a case, and the number of cells 34 may be any number as long as the number is plural.

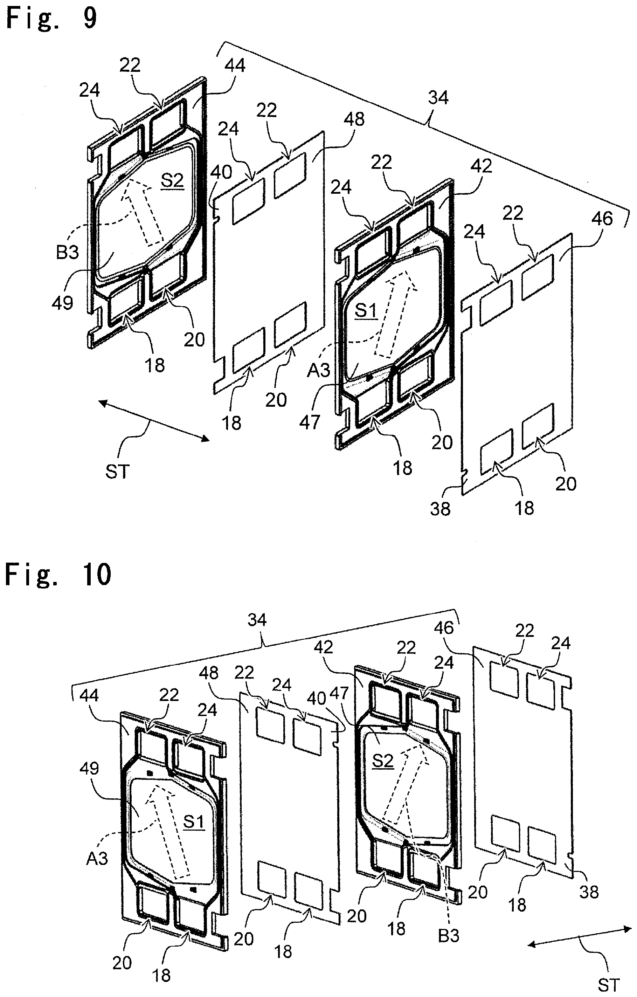

A plurality of first terminal portions 38 and a plurality of second terminal portions 40 are exposed on one side surface 36 of the stacked body 4. The first terminal portion 38 is a terminal included in an first electrode 46(Figs. 9 and 10) incorporated in the stacked body 4, and the second terminal portion 40 is a terminal included in a second electrode 48(Figs. 9 and 10) incorporated in the stacked body 4. A voltage application member (not shown) is connected to each of the first terminal portion 38 and the second terminal portion 40, and a positive and negative reverse voltage is applied to each of the terminal portions. Of the first electrode 46 and the second electrode 48, an electrode to which a positive voltage is applied functions as an anode, and an electrode to which a negative voltage is applied functions as a cathode.

Here, an internal configuration of the cell 34 will be described with reference to Figs. 9 and 10. Figs. 9 and 10 are exploded perspective views of the cell 34.

One cell 34 includes a first frame 42, a second frame 44, the first electrode 46, the second electrode 48, a first partition wall 47, and a second partition wall 49.

One cell 34 shown in Figs. 7 and 8 is configured by attaching the first electrode 46, the first frame 42, the second electrode 48, and the second frame 44 in that order in the stacking direction ST in an overlapping manner. Packing for sealing is provided at portions where the frames 42 and 44 and the electrodes 46 and 48 are in contact with each other.

The frames 42 and 44 are members that support the electrodes 46 and 48 and the partition walls 47 and 49, respectively. The frames 42 and 44 support the partition walls 47 and 49 inside and sandwich and support one of the electrode 46 or the electrode 48.

The first electrode 46 is an electrode having the first terminal portion 38 described above, and is sandwiched and supported between the first frame 42 and the second frame 44. The second electrode 48 is an electrode having the second terminal portion 40 described above, and is sandwiched and supported between the first frame 42 and the second frame 44.

The first partition wall 47 is a wall attached to the inside of the first frame 42, and is disposed between the adjacent first electrode 46 and second electrode 48. The second partition wall 49 is a wall attached to the inside of the second frame 44, and is disposed between the adjacent first electrode 46 and second electrode 48. Both the partition walls 47 and 49 have a function of isolating the first treatment space S1 in which the first electrode 46 is disposed and the second treatment space S2 in which the second electrode 48 is disposed, and are constituted by an ion exchange membrane to transmit cations and anions.

By stacking the plurality of cells 34 along the stacking direction ST, the stacked body 4 is configured in which the first treatment space S1 including the first electrode 46 and the second treatment space S2(that is, the anode chamber and the cathode chamber) including the second electrode 48 are alternately arranged.

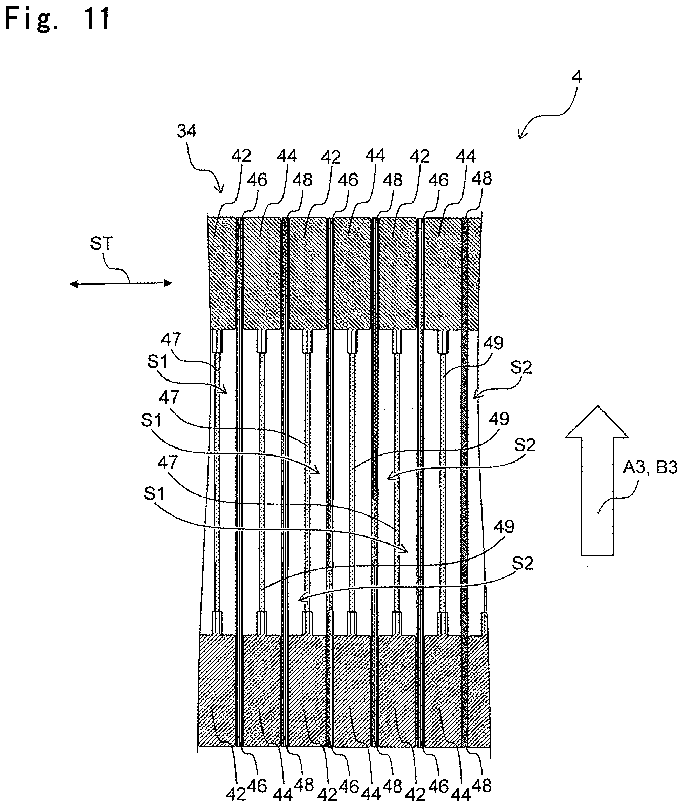

Fig. 11 is a longitudinal sectional view schematically showing an internal section of the stacked body 4 according to the embodiment.

In the stacked body 4 shown in Fig. 11, one of the electrode 46 or the electrode 48 and one of the partition wall 47 or the partition wall 49 are alternately arranged along the stacking direction ST, and the first treatment space S1 and the second treatment space S2 are also alternately arranged and isolated from each other by the partition walls 47 and 49. In such a configuration, in the treatment spaces S1 and S2, water flows upward on the sheet of Fig. 11 (see arrows A3 and B3), and electrolysis is performed while the water is flowing through the treatment spaces S1 and S2. Alkaline water is produced in one treatment space and acidic water is produced in the other treatment space and sent upward as treated water.

Referring to Figs. 9 and 10 again, in the first treatment space S1, a flow path obliquely upward from the first inflow path 18 toward the first outflow path 22 is formed (arrow A3). In the second treatment space S2, a flow path obliquely upward from the second inflow path 20 toward the second outflow path 24 is formed (arrow B3).

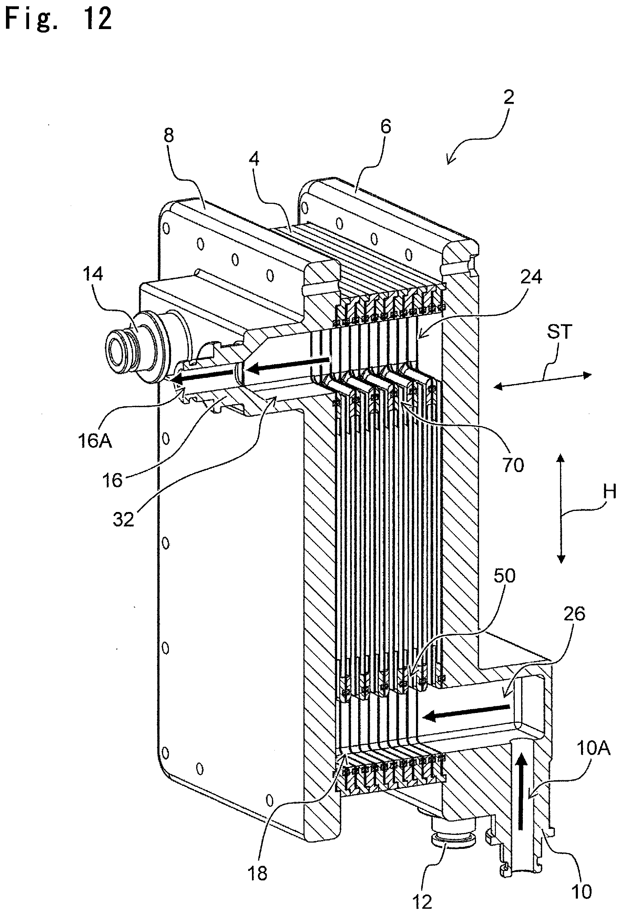

Next, details of the internal flow path of the stacked body 4 will be described with reference to Figs. 12 to 21.

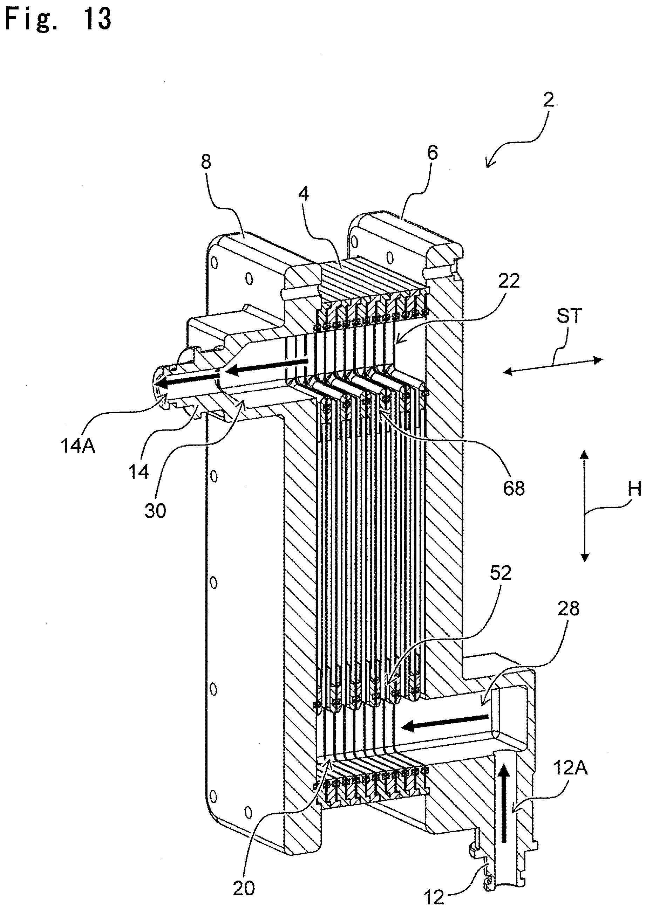

Fig. 12 is a perspective view showing a longitudinal section including the first inflow port 10 and the second outflow port 16 of the electrolytic bath 2. Fig. 13 is a perspective view showing a longitudinal section including the second inflow port 12 and the first outflow port 14 of the electrolytic bath 2.

In Fig. 12, the first inflow port 10 and the second outflow port 16 appear in the same cross section, but the first inflow port 10 and the second outflow port 16 do not communicate with each other. Similarly, in Fig. 13, the second inflow port 12 and the first outflow port 14 appear in the same cross section, but the second inflow port 12 and the first outflow port 14 do not communicate with each other. The first inflow port 10 shown in Fig. 12 communicates with the first outflow port 14 shown in Fig. 13, and the second inflow port 12 shown in Fig. 13 communicates with the second outflow port 16 shown in Fig. 12.

As shown in Fig. 12, an internal flow path 10A of the first inflow port 10 extends in a height direction H of the electrolytic bath 2, communicates with the first buffer inflow path 26, and is connected to the first inflow path 18 along the stacking direction ST of the stacked body 4. The first inflow path 18 faces a plurality of first flow inlets 50 inside the stacked body 4.

As shown in Fig. 13, an internal flow path 12A of the second inflow port 12 extends in a height direction H of the electrolytic bath 2, communicates with the second buffer inflow path 28, and is connected to the second inflow path 20 along the stacking direction ST of the stacked body 4. The second inflow path 20 faces a plurality of second flow inlets 52 inside the stacked body 4.

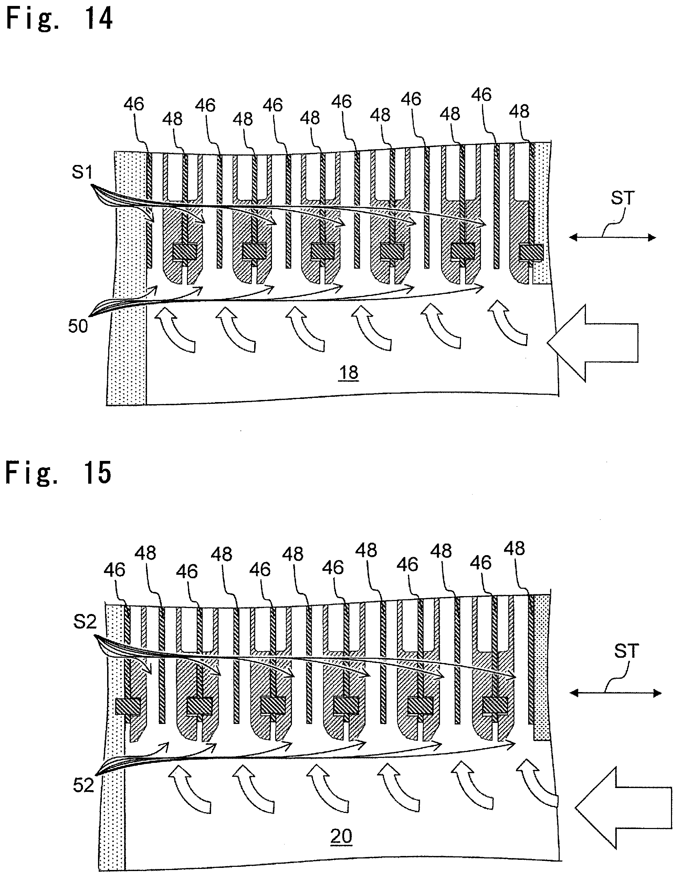

Fig. 14 is an enlarged schematic longitudinal sectional view showing the first inflow path 18 and a periphery of the plurality of first flow inlets 50 shown in Fig. 12.

As shown in Fig. 14, each of the first flow inlets 50 facing the first inflow path 18 is an opening for allowing raw water flowing through the first inflow path 18 to flow into the first treatment space S1 above, and the plurality of first flow inlets is arranged to be spaced apart in the stacking direction ST. The first treatment space S1 functions as an anode chamber or a cathode chamber in accordance with the positive or negative of the voltage applied to the first electrode 46.

Fig. 15 is an enlarged schematic longitudinal sectional view showing the second inflow path 20 and a periphery of the plurality of second flow inlets 52 shown in Fig. 13.

As shown in Fig. 15, each of the second flow inlets 52 facing the second inflow path 20 is an opening for allowing raw water flowing through the second inflow path 20 to flow into the second treatment space S2 above, and the plurality of second flow inlets is arranged to be spaced apart in the stacking direction ST. The second treatment space S2 functions as an anode chamber or a cathode chamber in accordance with the positive or negative of the voltage applied to the second electrode 48.

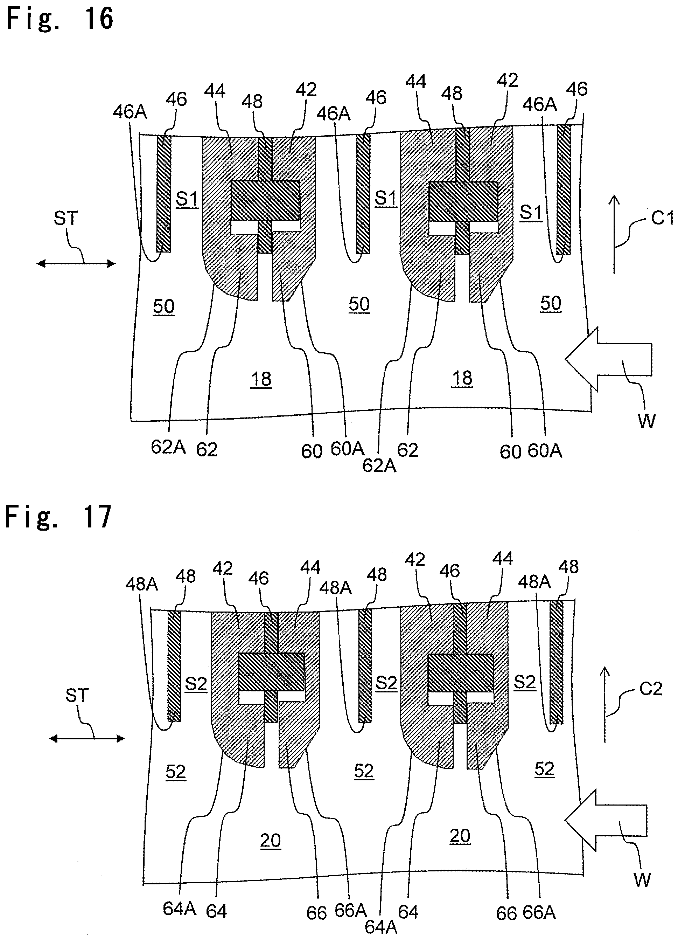

Fig. 16 is a longitudinal sectional view schematically showing a structure of ends of the frames 42 and 44 constituting the first flow inlet 50. Fig. 17 is a longitudinal sectional view schematically showing a structure of ends of the frames 42 and 44 forming the second flow inlet 52.

As shown in Fig. 16, the first frame 42 has an end 60 at a position facing the first inflow path 18, and the second frame 44 has an end 62 at a position facing the first inflow path 18. One first flow inlet 50 is formed between the two ends 60 and 62, and the plurality of first flow inlets 50 is formed along a water flow direction W.

In the present embodiment, the end 60 has an inclined surface 60A inclined with respect to the stacking direction ST, and the end 62 has an R shape 62A having a curved surface that is gently curved. Since the first flow inlet 50 includes the inclined surface 60A and the R shape 62A, the flow of water from the first inflow path 18 to the first flow inlet 50 becomes smooth. By changing an inclination angle of the inclined surface 60A and a curvature of the R shape 62A, the ease of flowing of water to the first flow inlet 50 can also be adjusted.

In the present embodiment, an end 46A of the first electrode 46 in the first flow inlet 50 is disposed at a position (see arrow C1) closer to a center of the stacked body 4 than the ends 60 and 62 of the frames 42 and 44 constituting the first flow inlet 50. In such a positional relationship, the first electrode 46 is less likely to obstruct the flow of water when water flows from the first inflow path 18 to the first flow inlet 50 while increasing the area of the first electrode 46.

As shown in Fig. 17, the first frame 42 has an end 64 at a position facing the second inflow path 20, and the second frame 44 has an end 66 at a position facing the second inflow path 20. One second inflow port 52 is formed between the two ends 64 and 66, and the plurality of second flow inlets 52 is formed along the water flow direction W.

In the present embodiment, the end 64 has an R shape 64A having a curved surface that is gently curved, and the end 66 has an inclined surface 66A inclined with respect to the stacking direction ST. Since the second flow inlet 52 includes the R shape 64A and the inclined surface 66A, the same effects as the effects of the inclined surface 60A and the R shape 62A forming the first flow inlet 50 can be obtained.

Similarly, an end 48A of the second electrode 48 in the second flow inlet 52 is disposed at a position (see arrow C2) closer to the center of the stacked body 4 than the ends 64 and 66 of the frames 42 and 44 constituting the second flow inlet 52.

Referring to Fig. 12 again, the second outflow port 16 is included in the same longitudinal section as the first inflow port 10. As shown in Fig. 13, the first outflow port 14 is included in the same longitudinal section as the second inflow port 12.

As shown in Fig. 13, a plurality of first flow outlets 68 is provided above the second flow inlet 52. The plurality of first flow outlets 68 does not communicate with the second flow inlet 52, but communicates with the first flow inlet 50 shown in Fig. 12 through the first treatment space S1 so as to form an oblique flow path inside the stacked body 34. The plurality of first flow outlets 68 faces the first outflow path 22 described above, and is connected to the first buffer outflow path 30 and an internal flow path 14A of the first outflow port 14 along the stacking direction ST through the first outflow path 22.

As shown in Fig. 12, a plurality of second flow outlets 70 is provided above the first flow inlet 50. The plurality of second flow outlets 70 does not communicate with the first flow inlet 50, but communicates with the second flow inlet 52 shown in Fig. 13 through the second treatment space S2 so as to form an oblique flow path inside the stacked body 34. The plurality of second flow outlets 70 faces the second outflow path 24 described above, and is connected to the second buffer outflow path 32 and an internal flow path 16A of the second outflow port 16 along the stacking direction ST through the second outflow path 24.

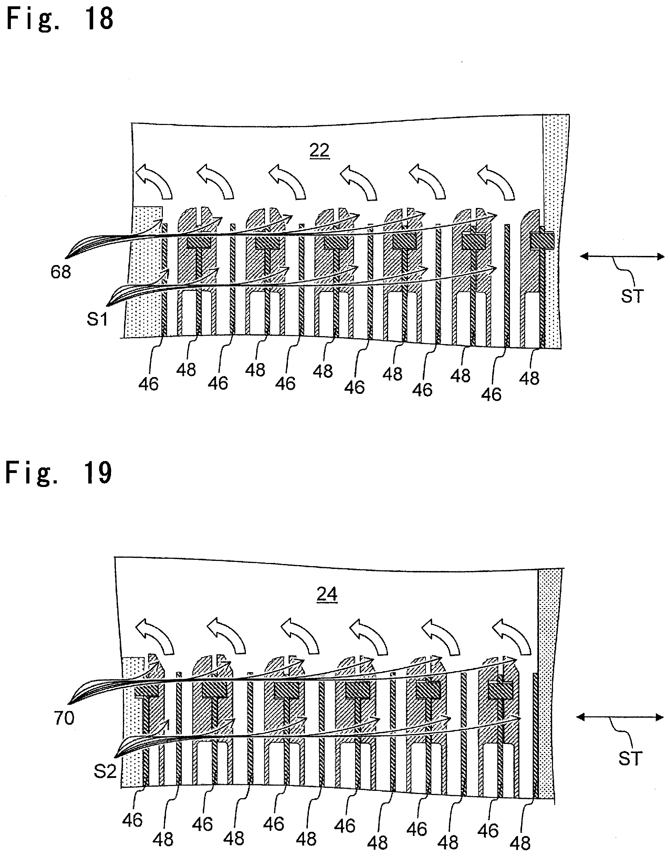

Fig. 18 is an enlarged schematic longitudinal sectional view showing a periphery of the plurality of first flow outlets 68 and the first outflow path 22 shown in Fig. 13. As shown in Fig. 18, the plurality of first flow outlets 68 facing the first outflow path 22 is openings for allowing the treated water having passed through the first treatment space S1 to flow into the first outflow path 22, and is arranged to be spaced apart in the stacking direction ST.

Fig. 19 is an enlarged schematic longitudinal sectional view showing a periphery of the plurality of second flow outlets 70 and the second outflow path 24 shown in Fig. 12. As shown in Fig. 19, the plurality of second flow outlets 70 facing the second outflow path 24 is openings for allowing the treated water having passed through the second treatment space S2 to flow into the second outflow path 24, and is arranged to be spaced apart in the stacking direction ST.

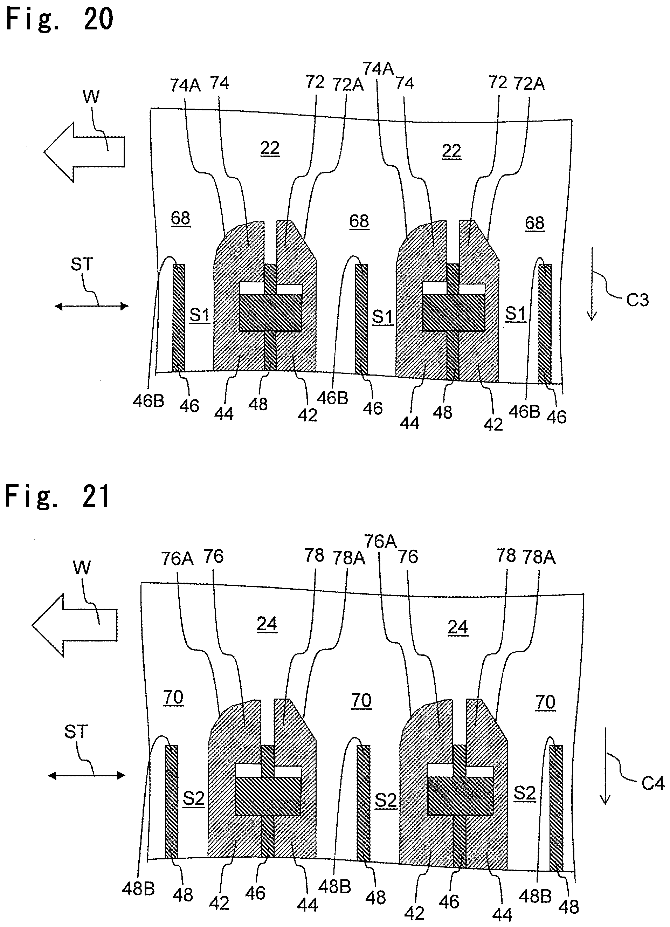

Fig. 20 is a longitudinal sectional view schematically showing a structure of ends of the frames 42 and 44 forming the first flow outlet 68.

As shown in Fig. 20, the first frame 42 has an end 72 at a position facing the first outflow path 22, and the second frame 44 has an end 74 at a position facing the first outflow path 22. One first flow outlet 68 is formed between the two ends 72 and 74. In the present embodiment, the end 72 has an inclined surface 72A inclined with respect to the stacking direction ST, and the end 74 of the second frame 44 has an R shape 74A having a curved surface that is gently curved.

Fig. 21 is a longitudinal sectional view schematically showing a structure of the ends of the frames 42 and 44 forming the second flow outlet 70.

As shown in Fig. 21, the first frame 42 has an end 76 at a position facing the second outflow path 24, and the second frame 44 has an end 78 at a position facing the second outflow path 24. One second flow outlet 70 is formed between the two ends 76 and 78. In the present embodiment, the end 76 has an R shape 76A having a curved surface that is gently curved, and the end 78 of the second frame 44 has an inclined surface 78A inclined with respect to the stacking direction ST.

By changing inclination angles of the inclined surfaces 72A and 78A and the curvatures of the R shapes 74A and 76A, the flow rate of water flowing from the flow outlets 68 and 70 to the outflow paths 22 and 24 can be adjusted.

In the present embodiment, the end 46B of the first electrode 46 in the first flow outlet 68 is disposed at a position (see arrow C3) closer to the center of the stacked body 4 than the ends 72 and 74 of the frames 42 and 44 constituting the first flow outlet 68. Similarly, the end 48B of the second electrode 48 in the second flow outlet 70 is disposed at a position (see arrow C4) closer to the center of the stacked body 4 than the ends 76 and 78 of the frames 42 and 44 constituting the second flow outlet 70.

When the electrolytic bath 2 having the configuration shown in Figs. 12 to 21 is driven, a positive or negative voltage is applied to the first electrode 46 through the first terminal portion 38 and a negative or positive voltage is applied to the second electrode 48 through the second terminal portion 40 while raw water is allowed to flow from a raw water source (not shown) through the inflow ports 10 and 12. As a result, while the first treatment space S1 including the first electrode 46 functions as an anode chamber or a cathode chamber, and the second treatment space S2 including the second electrode 48 functions as a cathode chamber or an anode chamber, the raw water is electrolyzed in each of the treatment spaces S1 and S2 to generate alkaline water or acidic water as treated water. The generated treated water is discharged to the outside from the outflow ports 14 and 16.

As shown in Figs. 12 and 13, the raw water flowing in from the inflow ports 10 and 12 flows through the internal flow paths 10A and 12A and then flows into the buffer inflow paths 26 and 28. When the raw water flows into the buffer inflow paths 26 and 28 having a larger flow path sectional area than the internal flow paths 10A and 12A, the flow of the raw water can be rectified before the raw water is electrolyzed in the treatment spaces S1 and S2. As a result, even when the plurality of flow inlets 50 and the plurality of flow inlets 52 are provided along the water flow direction, the flow rates flowing upstream and downstream are less likely to vary. It is therefore possible to suppress variation in flow rate among the plurality of cells 34 and to improve electrolytic performance of the electrolytic bath 2.

Furthermore, in the present embodiment, in addition to providing the buffer inflow paths 26 and 28 upstream of the treatment spaces S1 and S2, the buffer outflow paths 30 and 32 are also provided downstream of the treatment spaces S1 and S2. As a result, the entire internal flow path of the stacked body 4 can be rectified, variation in flow rate among the plurality of cells 34 can be further suppressed, and the electrolytic performance of the electrolytic bath 2 can be further improved.

The buffer inflow paths 26 and 28 as upstream buffer flow paths are only required to have larger flow path sectional areas than the internal flow paths 10A and 12A of the inflow ports 10 and 12, respectively. Similarly, the buffer outflow paths 30 and 32 as downstream buffer flow paths are only required to have larger flow path sectional areas than the internal flow paths 14A and 16A of the outflow ports 14 and 16, respectively. The buffer inflow paths 26 and 28 according to the present embodiment have substantially the same flow path sectional areas as the inflow paths 18 and 20, respectively, but may have different flow path sectional areas. Similarly, the buffer outflow paths 30 and 32 have substantially the same flow path sectional area as the outflow paths 22 and 24, respectively, but may have different flow path sectional areas.

### (Operation and Effect)

As described above, the electrolytic bath 2 of the present embodiment is an electrolytic bath including the plurality of cells 34 for electrolyzing water, and each of the cells 34 includes a pair of electrodes 46 and 48, a pair of partition walls 47 and 49, and a pair of frames 42 and 44 that support the electrodes 46 and 48 and the partition walls 47 and 49. The plurality of cells 34 is the stacked body 4 in which one of the electrode 46 or 48 and one of the partition wall 47 or 49 are alternately arranged. The plurality of cells 34 includes the first flow inlet 50 that allows raw water to flow into the first treatment space S1 including the first electrode 46, the second flow inlet 52 for allowing raw water to flow into the second treatment space S2 including the second electrode 48, the first flow outlet 68 that allows treated water having passed through the first treatment space S1 to flow out, and the second flow outlet 70 that allows treated water having passed through the second treatment space S2 to flow out. The plurality of cells 34 further includes the first inflow path 18 facing the first flow inlet 50, the second inflow path 20 facing the second flow inlet 52, the first outflow path 22 facing the first flow outlet 68, and the second outflow path 24 facing the second flow outlet 70. This configuration is further provided with the buffer inflow paths 26 and 28 connected to the first inflow path 18 and the second inflow path 20 in the stacking direction ST of the stacked body 4.

In such a configuration, by providing the buffer inflow paths 26 and 28 functioning as buffer spaces, the flow of water can be rectified upstream of the treatment spaces S1 and S2. It is therefore possible to reduce variation in flow rate among the plurality of cells 34 and to improve electrolytic performance of the electrolytic bath 2.

In the electrolytic bath 2 according to the present embodiment, the buffer inflow paths 26 and 28 include the first buffer inflow path 26 connected to the first inflow path 18 in the stacking direction ST and the second buffer inflow path 28 connected to the second inflow path 20 in the stacking direction ST. In such a configuration, by dividing the buffer inflow paths 26 and 28 into two, each of the first inflow path 18 and the second inflow path 20 can be independently rectified, which leads to further uniformity of the flow rate.

In the electrolytic bath 2 according to the present embodiment, the stacked body 4 further includes the first buffer outflow path 30 connected to the first outflow path 22 in the stacking direction ST and the second buffer outflow path 32 connected to the second outflow path 24 in the stacking direction ST. In such a configuration, by providing the buffer outflow paths 30 and 32 in addition to the buffer inflow paths 26 and 28, it is possible to perform rectification both upstream and downstream of the treatment spaces S1 and S2, to further reduce the variation in flow rate among the cells 34, and to further improve the electrolytic performance of the electrolytic bath 2.

The electrolytic bath 2 according to the present embodiment further includes the first case 6 having the buffer inflow paths 26 and 28 and the second case 8 having the buffer outflow paths 30 and 32, and the first case 6 and the second case 8 are attached to the stacked body 4. In such a configuration, the buffer flow paths can be constructed by the cases 6 and 8, and the electrolytic bath 2 can be protected.

In the electrolytic bath 2 according to the present embodiment, the first case 6 is attached to the first main surface 4A of the stacked body 4, and the second case 8 is attached to the second main surface 4B facing the first main surface 4A of the stacked body 4. In such a configuration, the electrolytic bath 2 can be protected in a well-balanced manner by the two cases 6 and 8.

In the electrolytic bath 2 according to the present embodiment, the first direction A3 from the first flow inlet 50 toward the first flow outlet 68 and the second direction B3 from the second flow inlet 52 toward the second flow outlet 70 intersect each other when viewed along the stacking direction ST. In such a configuration, as compared with a case where the first direction A3 and the second direction B3 do not intersect each other, it is easy to flow water over the entire surfaces of the electrodes while increasing the areas of the electrodes 46 and 48, which leads to improvement of the electrolytic performance.

In the electrolytic bath 2 according to the present embodiment, each of the first inflow path 18, the second inflow path 20, the first outflow path 22, and the second outflow path 24 extends in the stacking direction ST. In such a configuration, since the first inflow path 18, the second inflow path 20, the first outflow path 22, the second outflow path 24, the buffer inflow paths 26 and 28, and the buffer outflow paths 30 and 32 extend altogether in the stacking direction ST, the water flowing through the inside of the stacked body 4 is more easily rectified, which leads to improvement of the electrolytic performance.

In the electrolytic bath 2 according to the present embodiment, the ends 46A and 48A of the electrodes 46 and 48 in the flow inlets 50 and 52 of the stacked body 4 are located closer to the center of the stacked body 4 than the ends 60, 62, 64, and 66 of the frames 42 and 44 constituting the flow inlets 50 and 52, respectively. In such a configuration, by bringing the ends 46A and 48A of the electrodes 46 and 48 closer to the center than the ends 60, 62, 64, and 66 of the frames 42 and 44, respectively, while increasing the areas of the electrodes 46 and 48, the flow of water flowing into the treatment spaces S1 and S2 from the flow inlets 50 and 52 is less likely to be obstructed. This configuration can suppress a decrease in flow rate.

The electrolytic bath 2 according to the present embodiment further includes the inflow ports 10 and 12 communicating with the buffer inflow paths 26 and 28, and the sectional areas of the buffer inflow paths 26 and 28 are larger than the sectional areas of the internal flow paths 10A and 12A of the inflow ports 10 and 12. Such a configuration can enhance an effect of the rectification by the buffer inflow paths 26 and 28 and leads to uniformity of the flow rate.

Although having been described above with reference to the above embodiments, the invention of the present disclosure is not limited to the above embodiments. For example, in the above embodiment, a case has been described where the buffer inflow paths 26 and 28 are connected to the inflow paths 18 and 20, respectively, but the present invention is not limited to such a case. For example, a common buffer inflow path connected to both the inflow paths 18 and 20 may be provided. In this case, the inflow ports 10 and 12 may be integrated into one common inflow port. In the above embodiment, a case has been described where the buffer inflow paths 26 and 28 and the buffer outflow paths 30 and 32 are provided. However, the present invention is not limited to such a case, and the buffer outflow paths 30 and 32 may be omitted, and only the buffer inflow paths 26 and 28 may be provided.

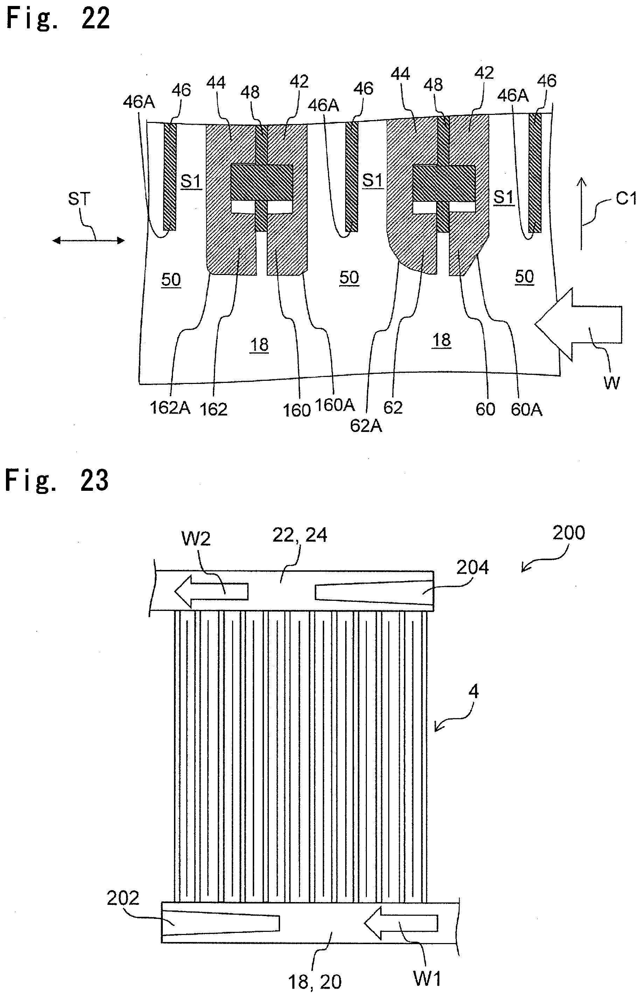

In the above embodiment, as shown in Figs. 16 and 17, a case has been described where the shapes of the ends 60 and 62 of the frames 42 and 44 constituting the flow inlets 50 and 52 are the same when there are a plurality of flow inlets 50 and 52 along W of water, but the present invention is not limited to such a case. For example, as in a modification shown in Fig. 22, the shapes of the ends of the frames may be changed along the water flow direction W.

Fig. 22 is a longitudinal sectional view schematically showing a structure of the ends of the frames 42 and 44 forming the first flow inlet 50 according to a first modification.

In the first modification shown in Fig. 22, the frames 42 and 44 have the ends 60 and 62 upstream and ends 160 and 162 downstream along the water flow direction W. An inclined surface 160A of the end 160 is set to have a smaller inclination angle with respect to the stacking direction ST than the inclined surface 60A of the end 60, and an R shape 162A of the end 162 is set to have a smaller curvature radius than the R shape 62A of the end 62.

When there is a plurality of first flow inlets 50 along the water flow direction W, the pressure and the flow rate of water tend to increase downstream. In the configuration shown in Fig. 22, the water is less likely to flow into the first flow inlet 50 at the ends 160 and 162 located downstream than at the ends 60 and 62 located upstream. This configuration can reduce the variation in flow rate in the plurality of first flow inlets 50 to obtain a uniform flow rate.

The shapes of the ends 60, 62, 160, and 162 shown in Fig. 22 may be similarly applied to the shapes of the ends 64 and 66 of the frames 42 and 44 constituting the second flow inlet 52 shown in Fig. 17. The shapes may be similarly applied to the ends 72, 74, 76, and 78 of the frames 42 and 44 constituting the flow outlets 68 and 70 shown in Figs. 20 and 21. In this case, the ends located downstream are only required to have a smaller curvature radius of the R shape than the end located upstream, and have a shallower inclination angle of the inclined surface with respect to the stacking direction ST.

The shapes of both the R shape and the inclined surface are not required to be changed, but either one of the shapes may be changed. That is, the other one of the shapes may be unchanged and the same along the water flow direction W. The shapes of the R shape and the inclined surface may be changed at arbitrary positions, and for example, the shapes may be changed stepwise.

In the first modification shown in Fig. 22, the flow inlet 50 has a plurality of inlets spaced apart in the stacking direction ST, the ends 62 and 162 of the frames 42 and 44 constituting the plurality of flow inlets 50 have a first end 62 having a first R shape 62A and a second end 162 located downstream of the first end 62 and having a second R shape 162A, and a curvature radius of the first R shape 62A is larger than a curvature radius of the second R shape 162A. This configuration can make the flow rate uniform and improve the electrolytic performance.

In the first modification shown in Fig. 22, the flow inlet 50 has a plurality of inlets spaced apart in the stacking direction ST, the ends 60 and 160 of the frames 42 and 44 constituting the plurality of flow inlets 50 have a first end 60 having a first inclined surface 60A and a second end 160 located downstream of the first end 60 and having a second inclined surface 160A, and an inclination angle of the first inclined surface 60A is larger than an inclination angle of the second inclined surface 160A. This configuration can make the flow rate uniform and improve the electrolytic performance.

In the above embodiment, a case has been described where no obstacle is disposed in the inflow paths 18 and 20 and the outflow paths 22 and 24 of the stacked body 4, but the present invention is not limited to such a case. For example, as in a modification shown in Fig. 23, an obstacles may be disposed in the inflow paths 18 and 20 and the outflow paths 22 and 24.

Fig. 23 is diagram schematically showing a longitudinal section of an electrolytic bath 200 according to a second modification. In the example shown in Fig. 23, a first obstacle 202 is disposed on the inflow paths 18 and 20, and a second obstacle 204 is disposed on the outflow paths 22 and 24. The first obstacle 202 is provided downstream along a water flow direction W1 in the inflow paths 18 and 20, and the second obstacle 204 is provided upstream along a water flow direction W2 in the outflow paths 22 and 24. The first obstacle 202 has a tapered shape tapered in a direction opposite to the water flow direction W1, and the second obstacle 204 has a tapered shape tapered in the water flow direction W2.

By providing the obstacles 202 and 204 at places with a high pressure of water and a high flow rate of water, the water easily flows to other places, and a uniform flow rate can be obtained.

In a second modification shown in Fig. 23, the first obstacle 202 is inserted into a region downstream of the first inflow path 18 or the second inflow path 20 of the stacked body 4, and the second obstacle 204 is inserted into a region upstream of the first outflow path 22 or the second outflow path 24 of the stacked body 4. This configuration can make the flow rate uniform and improve the electrolytic performance.

Note that, by appropriately combining the various modes described above, the effects of each of the modes can be achieved.

Although the present invention has been sufficiently described in connection with preferred embodiments with reference to the accompanying drawings as appropriate, various modifications and corrections are apparent to those skilled in the art. It should be understood that such modifications and corrections are included within the scope of the present invention according to the appended claims as long as the modifications and corrections do not depart from the scope. In addition, combinations of elements and changes in order in the embodiment can be achieved without departing from the scope and spirit of the present invention.

### INDUSTRIAL APPLICABILITY

The present invention is useful for an electrolytic bath including a plurality of cells for electrolyzing water.

### REFERENCE SIGNS LIST

- 2: Electrolytic bath
- 4: Stacked body
- 6: First case
- 8: Second case
- 10: First inflow port
- 12: Second inflow port
- 14: First outflow port
- 16: Second outflow port
- 18: First inflow path
- 20: Second inflow path
- 22: First outflow path
- 24: Second outflow path
- 26: First buffer inflow path
- 28: Second buffer inflow path
- 30: First buffer outflow path
- 32: Second buffer outflow path
- 34: Cell
- 42: First frame
- 44: Second frame
- 46: First electrode
- 47: First partition wall
- 48: Second electrode
- 49: Second partition wall
- 50: First flow inlet
- 52: Second flow inlet
- 68: First flow outlet
- 70: Second flow outlet
- ST: Stacking direction

## Claims

1. An electrolytic bath comprising a plurality of cells that electrolyzes water, wherein
each of the cells includes a pair of electrodes, a pair of partition walls, and a pair of frames that supports the electrodes and the partition walls,
the plurality of cells includes a stacked body in which one electrode and one partition wall are alternately arranged, and includes a first flow inlet that allows raw water to flow into a first treatment space including a first electrode, a second flow inlet that allows raw water to flow into a second treatment space including a second electrode, a first flow outlet that allows treated water having passed through the first treatment space to flow out, a second flow outlet that allows treated water having passed through the second treatment space to flow out, a first inflow path facing the first flow inlet, a second inflow path facing the second flow inlet, a first outflow path facing the first flow outlet, and a second outflow path facing the second flow outlet, and
a buffer inflow path connected to the first inflow path and the second inflow path in a stacking direction of the stacked body is further provided.

2. The electrolytic bath according to claim 1, wherein the buffer inflow path includes a first buffer inflow path connected to the first inflow path in the stacking direction and a second buffer inflow path connected to the second inflow path in the stacking direction.

3. The electrolytic bath according to claim 1, wherein the stacked body further includes a first buffer outflow path connected to the first outflow path in the stacking direction and a second buffer outflow path connected to the second outflow path in the stacking direction.

4. The electrolytic bath according to claim 3, further comprising:
a first case having the buffer inflow path; and
a second case having the first buffer outflow path and the second buffer outflow path, wherein
the first case and the second case are attached to the stacked body.

5. The electrolytic bath according to claim 4, wherein the first case is attached to a first main surface of the stacked body, and the second case is attached to a second main surface of the stacked body, the second main surface facing the first main surface.

6. The electrolytic bath according to claim 1, wherein a first direction from the first flow inlet to the first flow outlet and a second direction from the second flow inlet to the second flow outlet intersect each other when viewed along the stacking direction.

7. The electrolytic bath according to claim 1, wherein each of the first inflow path, the second inflow path, the first outflow path, and the second outflow path extends in the stacking direction.

8. The electrolytic bath according to claim 1, wherein an end of each of the electrodes in the flow inlet of the stacked body is located closer to a center of the stacked body than an end of each of the frames constituting the flow inlet.

9. The electrolytic bath according to claim 1, further comprising an inflow port that communicates with the buffer inflow path, wherein
a sectional area of the buffer inflow path is larger than a sectional area of an internal flow path of the inflow port.

10. The electrolytic bath according to claim 1, wherein
the flow inlet has a plurality of flow inlets spaced apart in the stacking direction,
an end of each of the frames constituting the plurality of flow inlets has a first end having a first R shape and a second end located downstream of the first end and having a second R shape, and a curvature radius of the first R shape is larger than a curvature radius of the second R shape.

11. The electrolytic bath according to claim 1, wherein
the flow inlet has a plurality of flow inlets spaced apart in the stacking direction,
an end of each of the frames constituting the plurality of flow inlets has a first end having a first inclined surface and a second end located downstream of the first end and having a second inclined surface, and an inclination angle of the first inclined surface is larger than an inclination angle of the second inclined surface.

12. The electrolytic bath according to claim 1, wherein an obstacle is inserted into a region downstream of the first inflow path or the second inflow path in the stacked body.
